# EUROPÄISCHE PATENTSCHRIFT

(11) **EP 3 299 260 B1**
(45) Veröffentlichungstag und Bekanntmachung des Hinweises auf die Patenterteilung: **06.01.2021**
(21) Anmeldenummer: 17191264.5
(22) Anmeldetag: 15.09.2017
(51) Int. Cl.: B62D 13/04, B60G 5/00, B60P 3/00

(54) **SATTELAUFLIEGER**
SEMI-TRAILER
SEMI-REMORQUE

(30) Priorität: 16.09.2016 DE 202016105189 U
(43) Veröffentlichungstag der Anmeldung: 28.03.2018
(73) Patentinhaber: Meusburger Fahrzeugbau GmbH, 94535 Eging am See (DE)
(72) Erfinder: Meusburger, Thomas, 94535 Eging am See (DE)
(74) Vertreter: Winter, Brandl, Fürniss, Hübner, Röss, Kaiser, Polte - Partnerschaft mbB

(56) Entgegenhaltungen:
- EP-A1- 1 557 305
- DE-A1- 3 507 587
- DE-A1-102015 001 864
- GB-A- 2 091 180
- US-A- 4 221 398
- US-A- 4 982 976

## Beschreibung

Die Erfindung betrifft einen Sattelauflieger, insbesondere einen Innenlader.

Der Gegenstand der vorliegenden Erfindung ist bei Sattelaufliegern generell anwendbar. Als ein mögliches Ausführungsbeispiel der vorliegenden Erfindung sei diese konkret anhand eines so genannten Innenladers beschrieben. Innenlader sind eine spezielle Bauform von Sattelaufliegern und dienen insbesondere zum Transport von langgestreckt/plattenförmigem Material, beispielsweise Glasscheiben.

In jüngster Zeit sind Transportanforderungen aufgetreten, bei denen Innenlader über bisherige Abmessungen hinausgehendes Transportgut befördern müssen. Beispiele hiervon sind Glasplatten mit Längen von bis zu 18 Meter. Bei Transport von Glasplatten mit derartigen Abmessungen ergeben sich mit Blick auf §70 STVZO bestimmte Auflagen, welche beim Transport eingehalten werden müssen, beispielsweise Begleitpersonen oder -fahrzeuge, wenn der Auflieger derartiger Sattelauflieger bestimmte Ausschermaße übersteigt.

Es wäre insofern wünschenswert, Innenlader zur Verfügung zu haben, welche beispielsweise Glasplatten mit dem oben genannten Abmessungen transportieren können, ohne dass hierbei die aufwendigen und insbesondere personalintensiven Begleit- und Sicherungsmaßnahmen erforderlich werden.

Es ist bereits bekannt, besonders lang bauende Auflieger mit lenkbaren Achslinien zu versehen, um die Manövrierbarkeit zu verbessern und um kleinere Radien durchfahren zu können. Lenkbare Achslinien mit quer, also in Fahrzeugbreitenrichtung verlaufenden Spurstangen verbieten sich bei Innenladern aufgrund der dortigen speziellen Formgebung des Chassis oder Fahrgestells. Man ist daher in der Regel dazu gezwungen, für die einzelnen Räder einer jeden Achslinie auf Einzelradaufhängungen zurückzugreifen, wie dies beispielsweise in der DE 35 07 587 A1 vorgeschlagen wird. Allerdings fehlt es der Einzelradaufhängung der DE 35 07 587 A1 an einer geeigneten Lenkmöglichkeit, sodass die dort beschriebene Einzelradaufhängung letztendlich nur bei Sattelaufliegern zum Einsatz gelangen kann, welche im Betrieb die Empfehlungen zu §70 STVZO gar nicht erst notwendig werden lassen, beziehungsweise dann bei deren Betrieb eben diese Maßnahmen beachtet oder ergriffen werden müssen.

Die EP 1 557 305 A1 zeigt einen Fahrzeuganhänger mit einem Fahrgestell und Rädern, die über Einzelradaufhängungen mit dem Fahrgestell verbunden sind, wobei zwischen Lenkschenkeln eine Spurstange angeordnet ist und jedes der Räder durch eine Achsschenkellenkung lenkbar ausgebildet ist.

Außerdem offenbart die Patentanmeldung Nr. US4221398A einen Sattelauflieger nach dem Oberbegriff des Anspruchs 1.

Die vorliegende Erfindung hat es sich ausgehend von der US4221398A zur Aufgabe gemacht, einen Sattelauflieger für den Straßenverkehr, insbesondere einen Innenlader, mit einer robusten, zuverlässigen, ausfallssicheren und platzsparenden Lenkeinschlagkopplung zu schaffen.

Zur Lösung dieser Aufgabe schlägt die vorliegende Erfindung einen Sattelaufleger mit den in Anspruch 1 aufgeführten Merkmalen vor. Vorteilhafte Weiterbildungen sind Gegenstand der Unteransprüche.

Durch die lenkbare Ausgestaltung eines jeden Rads erhält der Sattelauflieger gemäß der Erfindung eine erhöhte oder verbesserte Manövrierbarkeit und durch die Ausbildung der Lenkung für jedes Rad in Form einer Achsschenkellenkung erfolgt eine platzsparende Ausgestaltung der Lenkung insbesondere derart, dass diese auch bei Innenladern mit den dortigen besonderen baulichen Gegebenheiten zum Einsatz gelangen kann.

Sattelauflieger der in Frage stehenden Art und hier insbesondere Innenlader müssen oftmals sehr schweres Transportgut aufnehmen und transportieren können, sodass sich bei einer Mehrzahl von Achslinien die zur transportierende Last besser und gleichmäßiger verteilt, was zu geringeren Achslasten führt.

Erfindungsgemäß sind die auf jeweils derselben Seite des Fahrgestells angeordneten Räder aller Achslinien im Sinne eines gleichgerichteten Lenkeinschlags gekoppelt. Alle Räder auf einer Seite des Fahrgestells führen damit einen gleichgerichteten, das heißt in die gleiche Richtung weisenden Lenkeinschlag aus. Erfolgt die Kupplung mechanisch, so stellt dies eine robuste, zuverlässige und ausfallsichere Art und Weise der Lenkeinschlagkopplung da.

Bevorzugt erzwingt hierbei jede Kopplung auf einer Seite des Fahrgestells zueinander unterschiedliche Lenkeinschläge der dortigen Räder. Hierdurch lässt sich das Kurvenfahrverhalten verbessern und stabilisieren, beispielsweise in dem das am weitesten Richtung Heck des Fahrgestells liegende Radpaar einer Achslinie einen starken Lenkeinschlag vornimmt, das in Richtung Heck vorletzte Radpaar einer Achslinie einen demgegenüber verringerten Lenkeinschlag und das in Richtung Fahrzeugheck drittletzte Radpaar einer Achslinie einen noch geringeren Lenkeinschlag (wenn von drei Achslinien ausgegangen wird).

Jedes Rad ist erfindungsgemäß in einer in Fahrt- beziehungsweise Längsrichtung des Sattelaufliegers verlaufenden Schwinge (Längsträger) gelagert, welche am und gegenüber dem Fahrgestell in einem Schwenklager in Fahrzeughöhenrichtung schwenkbeweglich gelagert oder angelenkt ist. Dies stellt eine besonders platzsparende Lagerung eines jeden Rads gegenüber dem Fahrgestell dar. Hierbei können an der Schwinge Federungs- und/oder Dämpfungs- und/oder Verstell- und/oder Führungselemente angreifen, um die in der Praxis erwünschten beziehungsweise notwendigen kinematischen Eigenschaften der Schwinge zu erhalten.

Die (mechanische) Kopplung zwischen einander (in Längsrichtung des Fahrgestells) benachbarten Rädern auf einer Seite des Fahrgestells erfolgt erfindungsgemäß über jeweils eine Verbindungsstange, welche sich in Fahrgestelllängsrichtung erstreckt und welche über einen Steuerhebel an einer Spurstange der Achsschenkellenkung angreift. Auch dies stellt eine mechanisch zuverlässige und platzsparende Ausgestaltungsform dar.

Erfindungsgemäß ist die Spurstange an einem ihrer Enden mit dem Steuerhebel in einem Schwenklager verbunden und an ihrem anderen Ende über einen Spurstangenkopf mit dem Achsschenkel der Achsschenkellenkung. Hierbei berühren sich eine Umfangslinie eines imaginären Kreises um den Mittelpunkt bzw. die Schwenkachse des Schwenklagers an der Verbindung Steuerhebel/Spurstange, der durch den Spurstangenkopf bzw. dessen Angriffspunkt am Achsschenkel verläuft, und eine Umfangslinie eines imaginären Kreises um den Mittelpunkt bzw. die Schwenkachse des Schwenklagers an der Verbindungschwinge/Fahrgestell, der ebenfalls durch den Spurstangenkopf bzw. dessen Angriffspunkt am Achsschenkel verläuft, in einem Punkt, der auf einer die beiden Schwenkachsen verbindenden geraden Linie liegt. Die Einzelradaufhängung kann dadurch im Besonderen so auslegt sein, dass die Umfangslinien der zuvor erwähnten imaginären Kreise in einem dem normalen Fahrbetrieb des Sattelaufliegers entsprechenden, definierten Auslenkungsbereich der Schwinge (normaler Federweg des Fahrgestells) gegenüber dem Fahrgestell im Wesentlichen deckungsgleich sind dergestalt, dass eine Bewegung des Spurstangenkopfes in Längsrichtung des Fahrgestells bei einer Federbewegung des Fahrgestells einen definierten Betrag nicht überschreitet. Durch diese Ausgestaltungsform wird in vorteilhafter Weise erreicht, dass trotz der in Längsrichtung verlaufenden Spurstange der Achsschenkellenkung bei Ein-und Ausfederungsbewegungen der Schwinge das an der Schwinge gelagerte Rad keine oder nur vernachlässigbare Lenkbewegungen ausführt, sodass das Geradeauslaufverhalten des Sattelaufliegers bzw. der Reifenverschleiß durch Lenkbewegungen während der Geradeausfahrt nicht nachteilig beeinflusst wird.

Erfindungsgemäß kann das Fahrgestell in der Weise absenkbar sein, dass es bei einer Absenkung um einen Betrag, der über einen dem normalen Fahrbetrieb des Sattelaufliegers entsprechenden, definierten Auslenkungsbereich der Schwinge gegenüber dem Fahrgestell (Federweg des Fahrgestells) hinausgeht, das jeweils an der entsprechenden Schwinge gelagerte Rad eine Zwangsverstellung im Sinne einer Nachspur erfährt. Bei Innenladern mit einem in Höhenrichtung nach oben und unten offenen Laderaum kann die Nachspur beispielsweise bei einer Rückwärtsfahrt zur Aufnahme einer zu transportierenden Ladung in den Laderaum zu einer geringfügigen seitlichen Verformung des Fahrgestells führen. Ist auf dem Fahrgestell ein Verdeck, z.B. Planenverdeck angeordnet, kann es daher sinnvoll sein, wenn die Seitenwände des Verdecks mit dem Dach des Verdecks seitlich auslenkbar verbunden sind, damit die im elastischen Bereich erfolgenden Veränderung des Fahrgestells vom Verdeck aufgenommen werden können. Die sich hieraus ergebenden wesentlichen Vorteile in der Praxis werden in der nachfolgenden Beschreibung noch näher dargelegt.

Die Lenkung des wenigstens einen Rads auf der einen Seite des Fahrgestells ist mit derjenigen des entsprechenden anderen Rades über eine Hydraulikverbindung verbunden, welche das Wirkprinzip einer quer verlaufenden Spurstange hat. Die Lenkung ist hiermit in der erforderlichen Weise zweikreisig ausgeführt.

Das Fahrgestell ist im Bereich der wenigstens einen Achslinie in Spurrichtung gesehen bevorzugt verbreitet ausgebildet. Unter anderem wird hierdurch hinreichend Einbauraum für die jeweiligen Lenk- und Lagergeometrien geschaffen und darüber hinaus wird den zugehörigen Rädern der erforderliche Freiraum für die erzielbaren Lenkeinschläge gegeben.

Ist das Fahrgestell in einem in Fahrtrichtung vor der wenigstens einen Achslinie liegenden Bereich verjüngt ausgebildet, ergeben sich besondere Vorteile in der Manövrierbarkeit, wie ebenfalls in der nachfolgenden Beschreibung noch näher ausgelegt werden wird. Ist das Fahrgestell in einem in Fahrtrichtung hinter der wenigstens einen Achslinie liegenden Bereich verjüngt ausgebildet, ergeben sich Vorteile hinsichtlich des Ausschermaßes, wie ebenfalls in der nachfolgenden Beschreibung noch näher ausgelegt werden wird.

Weitere Einzelheiten, Aspekte und Vorteile der vorliegenden Erfindung ergeben sich besser aus der nachfolgenden Beschreibung anhand der Zeichnung.

Es zeigt:
Fig. 1A in Seitenansicht ein als Auflieger für eine Zugmaschine ausgebildetes Sattelauflieger in Form eines Innenladers ohne zugehörige Zugmaschine;
Fig. 1B eine Draufsicht auf Fig. 1A;
Fig. 2 eine Seitenansicht auf einen Satz aus drei Rädern mit den zugehörigen Lagerungs- und Lenkmechanismen;
Fig. 3 eine Fig. 2 entsprechende Ansicht ohne montierte Reifen;
Fig. 4 eine Ansicht von schräg oben auf den Satz von Fig. 2;

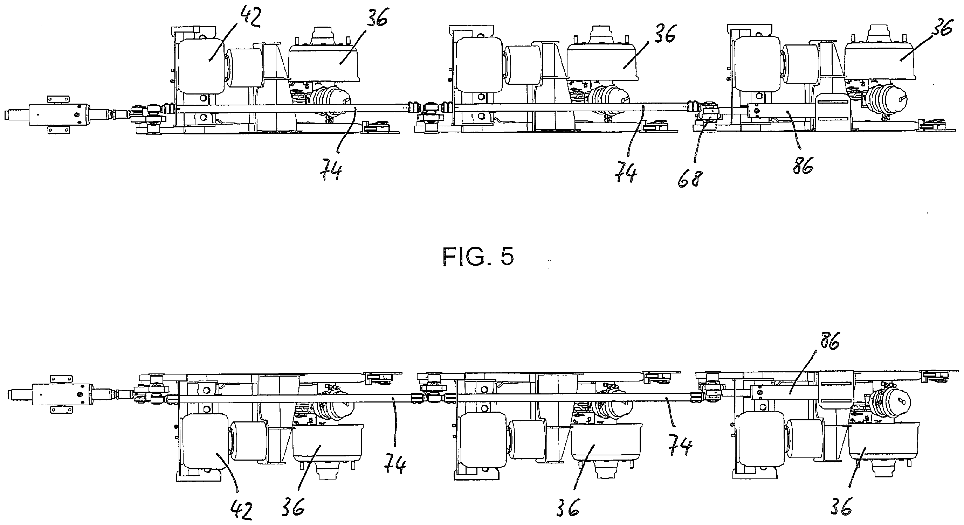

Fig. 5 eine Draufsicht von oben auf zwei Sätze entsprechend Fig. 2 in Einbaulage links und rechts eines in Fig. 5 nicht dargestellten Fahrgestells;
Fig. 6 eine gegenüber Fig. 2 vergrößerte Darstellung im Bereich eines Rads;
Fig. 7 eine Ansicht von schräg unten auf Fig. 6;

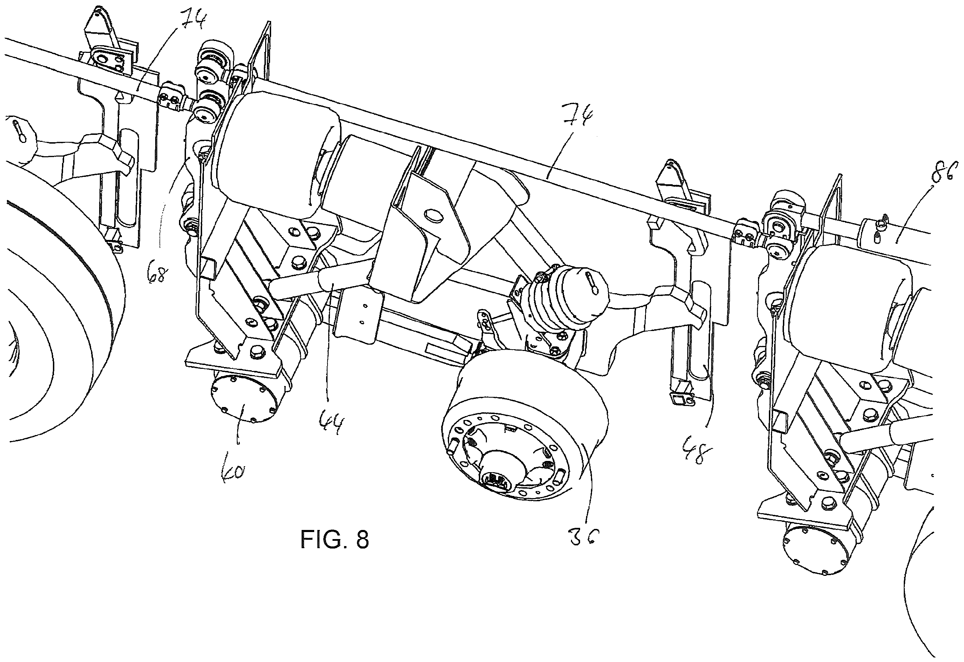

Fig. 8 eine Ansicht von schräg oben auf Fig. 6;

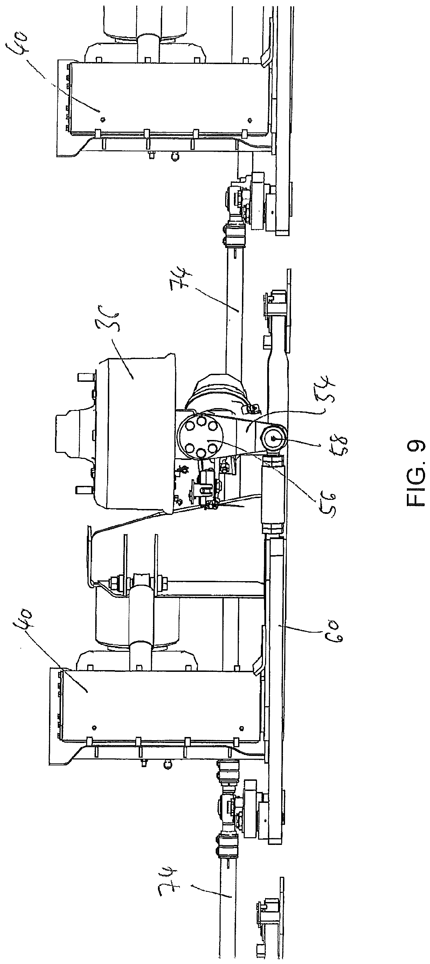

Fig. 9 eine Ansicht direkt von unten auf Fig. 6;

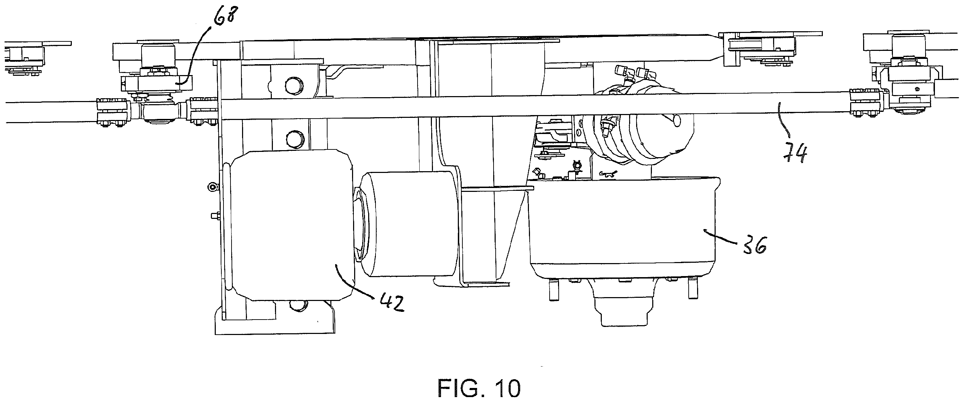

Fig. 10 eine Ansicht von direkt oben auf Fig. 6;
Fig. 11 eine Ansicht alleine auf das Lenkgestänge eines Satzes gemäß Fig. 2;
Fig. 12 eine im Wesentlichen Fig. 5 entsprechende Ansicht auf das Lenkgestänge, sowie den Verlauf von Fluidleitungen;
Fig. 13 eine erläuternde Darstellung des Kurvenfahrverhaltens;
Fig.14 eine erläuternde Darstellung der Spurkreisberechnung;
Fig. 15 eine Fig. 1B entsprechende Darstellung zur Erläuterung eines besonderen Vorteils der vorliegenden Erfindung;
Fig. 16A eine Rückansicht des Fahrgestells (ohne Räder) in einem nachspurbedingten Verformungszustand; und
Fig. 16B eine Rückansicht des Fahrgestells (ohne Räder) in einem Normalzustand.

In der nachfolgenden Beschreibung wird auf die einzelnen Figuren der Zeichnung Bezug genommen, wobei festzuhalten ist, dass die einzelnen Figuren der Zeichnung zueinander nicht maßstäblich und darüber hinaus abstrahierend und nicht detailliert sind. Dargestellt sind Ausführungsbeispiele, welche nicht als einschränkend zu verstehen sind. In den einzelnen Figuren der Zeichnung bezeichnen gleiche Bezugszeichen gleiche oder einander entsprechende Teile, Abschnitte oder Bereiche.

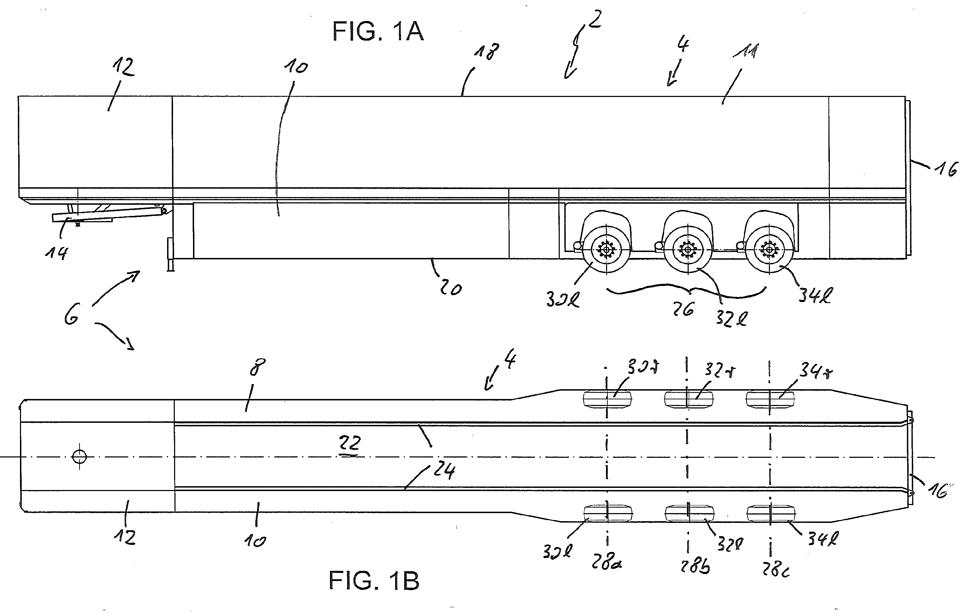

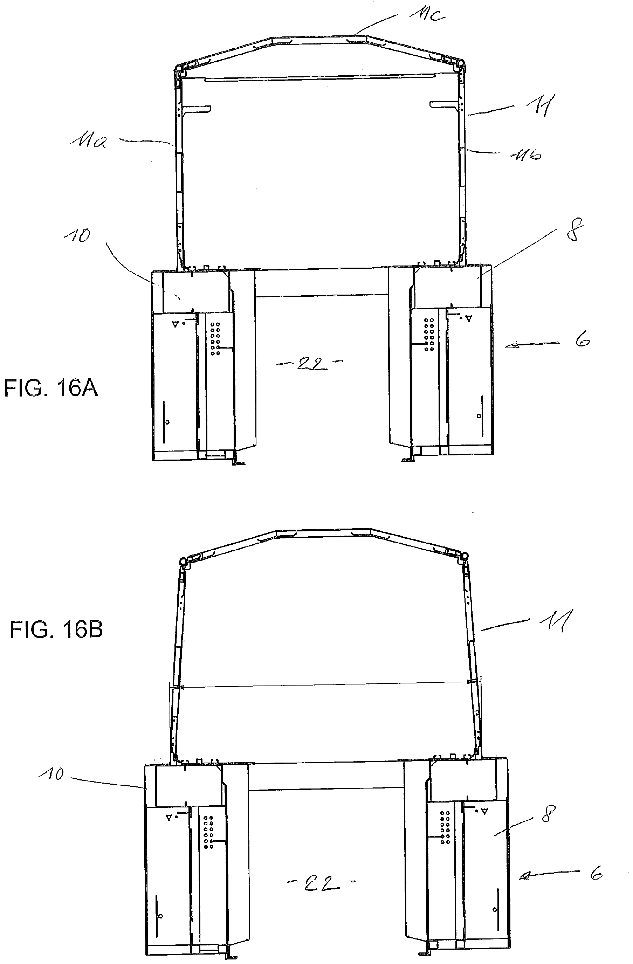

Ein in der Zeichnung insgesamt mit 2 bezeichneter erfindungsgemäßer Sattelauflieger ist im Ausführungsbeispiel als sogenannter Innenlader 4 ausgebildet. Der Innenlader 4 weist in bekannter Weise ein in einer Draufsicht im Wesentlichen stimmgabel- oder U-förmiges Fahrgestell 6 auf, wobei die U-Form in der Draufsicht gemäß Fig. 1B gebildet ist aus zwei seitlichen Wänden 8 und 10, welche die Schenkel des U definieren, sowie einem vorderen Endabschnitt 12, der die beiden Wände oder Schenkel 8 und 10 miteinander verbindet und in welchem sich eine Kupplungsvorrichtung 14 für eine nicht näher dargestellte Zugmaschine befindet. Das hintere offene Ende des U-Profils kann durch eine Ladeluke 16 verschlossen werden. Zwischen den beiden Wänden 8 und 10 ist ein nach oben und unten offener Laderaum 22 definiert, der bei geöffneter Luke 16 von hinten her zugänglich ist. In den Laderaum 22 können in bekannter Weise Paletten eingeschoben werden, welche das eigentliche Ladegut tragen. Die Paletten kommen hierbei auf Schienen 24 zu liegen, welche im unteren Endabschnitt, also im Bereich der Unterseite 20 der beiden Wände 8 und 10 in der Längsrichtung verlaufend ausgebildet sind. Zur Aufnahme der Paletten mit dem Ladegut beziehungsweise zum Entladen hiervon kann das gesamte Fahrgestell 6 im Wesentlichen auf Bodenniveau abgesenkt werden. Mit dem Bezugszeichen 11 ist ein Verdeck angegeben, das beispielsweise von einem in Fig. 16A und 16B deutlicher zu erkennenden, an sich bekannten Planenverdeck gebildet ist.

Diese Bauweise und Funktionsweise von Innenladern ist hinlänglich bekannt und soll hier nicht näher ausgeführt werden.

An dem dem Endabschnitt 12 abgewandten Endbereich weist der Sattelauflieger einen Achs- oder Rädersatz 26 auf, der im dargestellten Ausführungsbeispiel aus drei Achslinien 28a, 28b und 28c bestehen möge. Jede der Achslinien 28 weist zwei Räder 30r und 30l beziehungsweise 32r und 32l beziehungsweise 34r und 34l auf.

Es sei festzuhalten, dass die Achslinien 28 gemäß Fig. 1B als virtuelle und nicht als reale, die Längserstreckung Fahrgestells 6 querende Achsen zu verstehen sind.

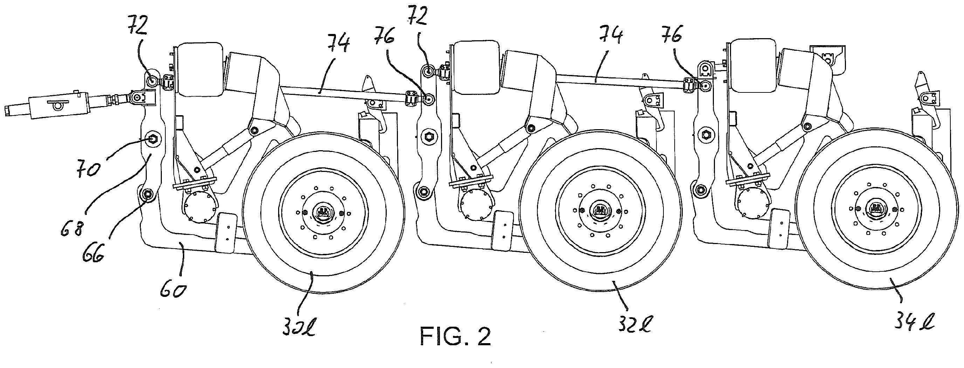

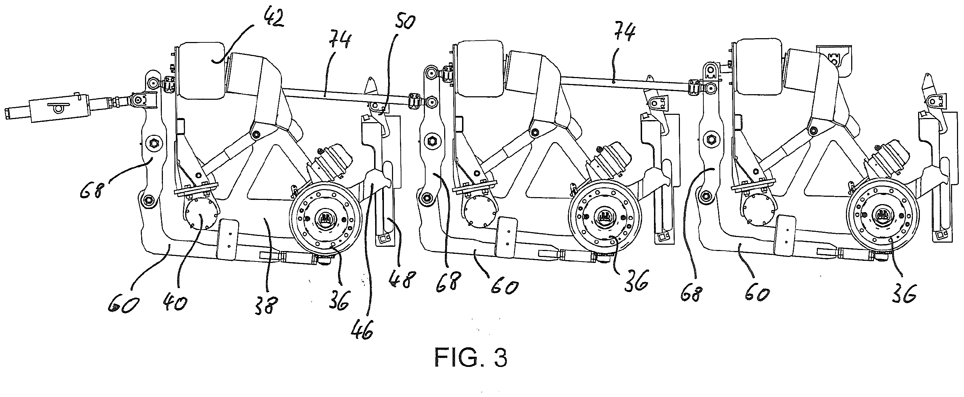

Fig. 2 zeigt einen der beiden Radsätze 26, wobei in Fig. 2 der in der Draufsicht von Fig. 1B untere Radsatz 26 mit den Rädern 30l, 32l und 34l dargestellt ist. Fig. 3 ist eine Fig. 2 entsprechende Ansicht ohne die Räder 30 bis 34, sodass die jeweiligen Anordnungen 36 bestehend aus Nabe, Bremstrommel etc. sichtbar sind.

Jede Anordnung 36 und damit jedes Rad 30 bis 34 ist gegenüber dem Chassis oder Rahmen 6 mit einer Schwinge 38 gelagert. Aufgrund der Baugleichheit der einzelnen Schwingen in den jeweiligen Radsätzen 26 sei nachfolgend nur noch eine dieser Schwingen 38 betrachtet.

Die Schwinge 38 ist am Rahmen 6 über ein Schwenklager 40 gelagert. Weiterhin wirken zwischen der Schwinge 38 und dem Fahrgestell 6 in bekannter Weise eine pneumatische Federung 42 und ein hydraulischer Schwingungsdämpfer 44. Alternativ dazu kann statt der pneumatischen Federung eine hydraulische Federung vorgesehen sein. In diesem Fall ist eine hydraulische Dämpfung nicht notwendig. An dem dem Schwenklager 40 abgewandten Endbereich trägt die Schwinge 38 die Anordnung 36 und damit das zugehörige Rad (zum Beispiel das Rad 30l). Am freien Ende einer von der Schwinge 38 ausgehenden Verlängerung 46 ist die Verlängerung 46 und damit die Schwinge 38 in einer Führung 48 geführt. Im Bereich der Führung 48 befindet sich weiterhin ein Achsanschlag 50.

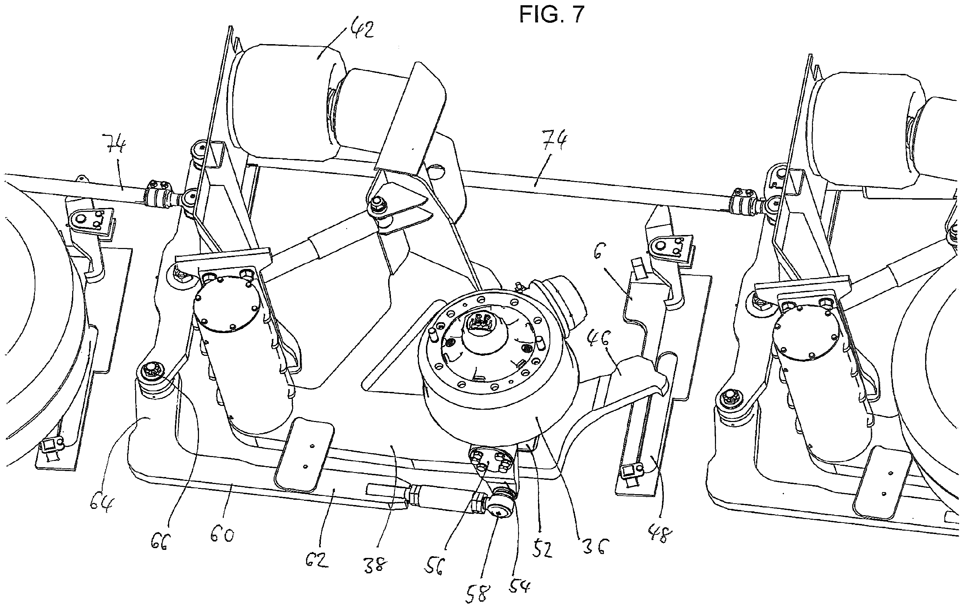

Die Lagerung der Anordnung 36 und damit des zugehörigen Rads an der Schwinge 38 erfolgt über eine Achsschenkellenkung. Wie insbesondere aus Fig. 7 hervorgeht, ist an der Schwinge 38 ein Achsschenkelträger 52 angeordnet, der einen Achsschenkel oder Lenkhebel 54 mittels eines Lagers 56 dreh- beziehungsweise schwenkbar lagert. An einem freien Ende des Achsschenkels 54 ist über einen nicht näher dargestellten Achsstummel die jeweilige Anordnung 36 gelagert. Das andere Ende des Achsschenkels 54 ist über einen Spurstangenkopf 58 mit einer Spurstange 60 in Verbindung. Die Spurstange 60 hat die aus der Zeichnung ersichtliche L-förmige Ausgestaltung mit einem langen Schenkel 62 und einem kurzen Schenkel 64. Das freie Ende des langen Schenkels 62 ist über den Spurstangenkopf 58 mit dem Achsschenkel 54 in Verbindung. Das freie Ende des kurzen Schenkels 64 ist über ein Lager 66 an einem Ende eines Steuerhebels 68 angeschlagen, der über ein weiteres Lager 70 schwenkbar an dem Fahrgestell 6 gelagert ist. Das dem Lager 66 abgewandte Ende des Steuerhebels 68 ist über ein weiteres Lager 72 mit einer Verbindungsstange 74 verbunden.

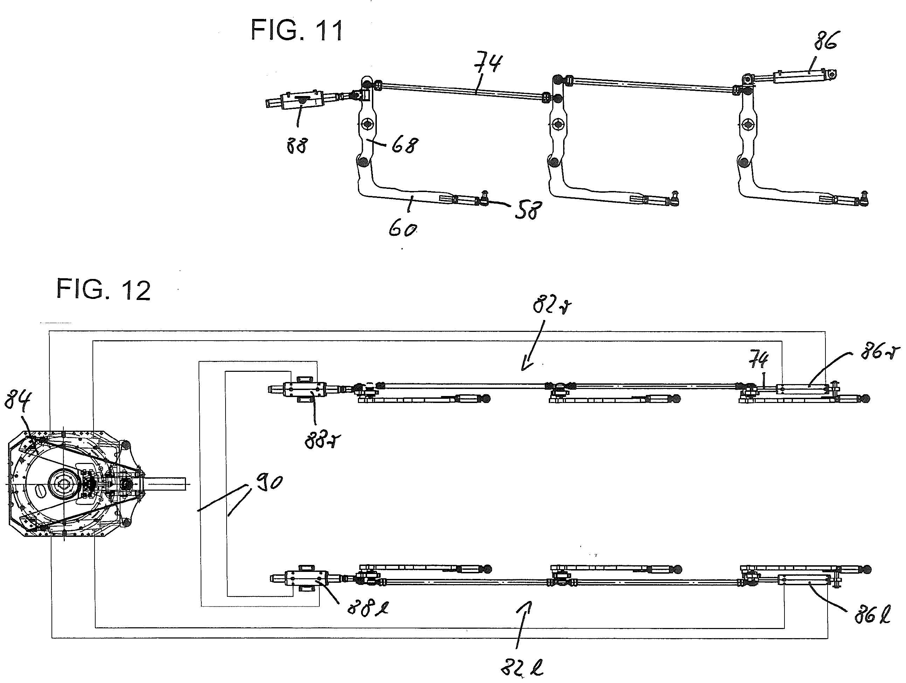

Bezug genommen wird nun insbesondere auf Fig. 2, aus welcher hervorgeht, dass das dem Lager 72 abgewandte Ende der Verbindungsstange 74 über ein Lager 76 mit einem Steuerhebel 68 in Verbindung ist, der baulich und funktionell dem voranstehend genannten Steuerhebel 68 (der in Fig. 2 dem Rad 30l zugeordnet ist) entspricht. An diesem weiteren Steuerhebel 68 befindet sich ein dem Lager 72 entsprechendes Lager, über das eine weitere Verbindungsstange 74 angelenkt ist. Diese weitere Verbindungsstange 74 (in Fig. 2 die hintere Verbindungsstange 74) ist mit einem weiteren Steuerhebel 68 in einem Lager 76 in Verbindung. Der Steuerhebel 68 (der dem Rad 34l in Fig. 2 zugeordnet ist) wird über einen Fluidzylinder 86 (Fig. 11) betätigt.

Der in Fig. 2 mittige Steuerhebel 68 und der in Fig. 2 rechte Steuerhebel 68 sind wiederum an ihren unteren Enden über die dortigen Lager 66 mit den Spurstangen 60 in Verbindung.

Man erkennt, dass eine vom Fluidzylinder 86 erzwungene Bewegung des in Fig. 2 rechten Steuerhebels 68 über die beiden Verbindungsstangen 74 gleichermaßen auf die beiden anderen Steuerhebel 68 übertragen wird, welche dann wiederum entsprechende, in Längsrichtung des Fahrgestells 6 verlaufende Bewegungen der Spurstangen 60 bewirken. Diese Bewegungen der Spurstangen 60 erzeugen dann gleichgerichtete Lenk- oder Einschlagbewegungen der Räder 30 bis 34.

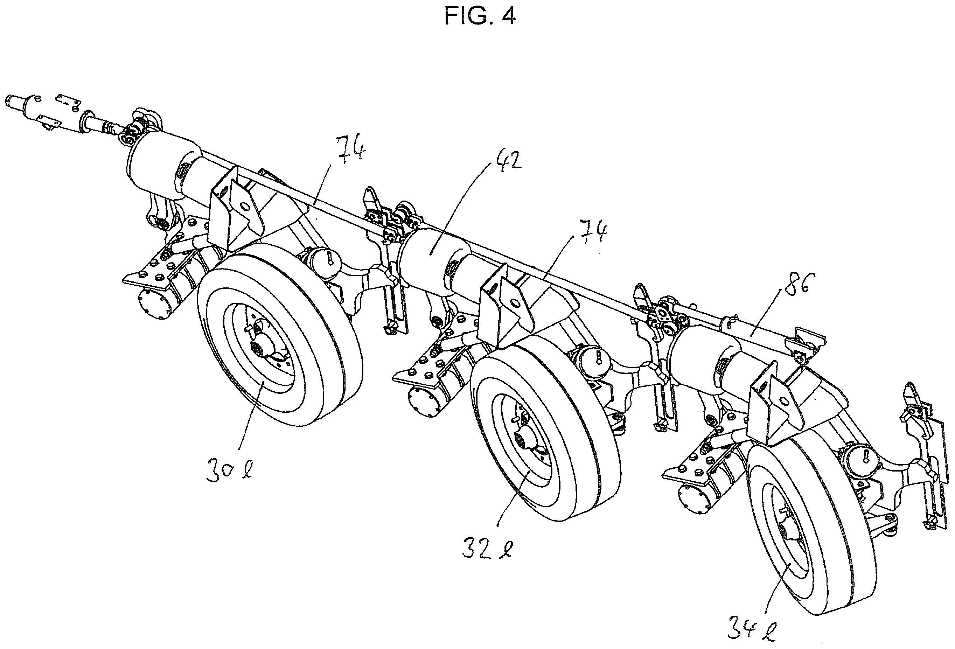

Durch Wahl der Lagen der Lager 76 an den jeweiligen Steuerhebeln 68 können unterschiedliche Übertragungsverhältnisse realisiert werden, sodass den einzelnen Rädern 30 bis 34 unterschiedlich starke Lenkeinschläge verliehen werden können, wie in Fig. 4 erkennbar.

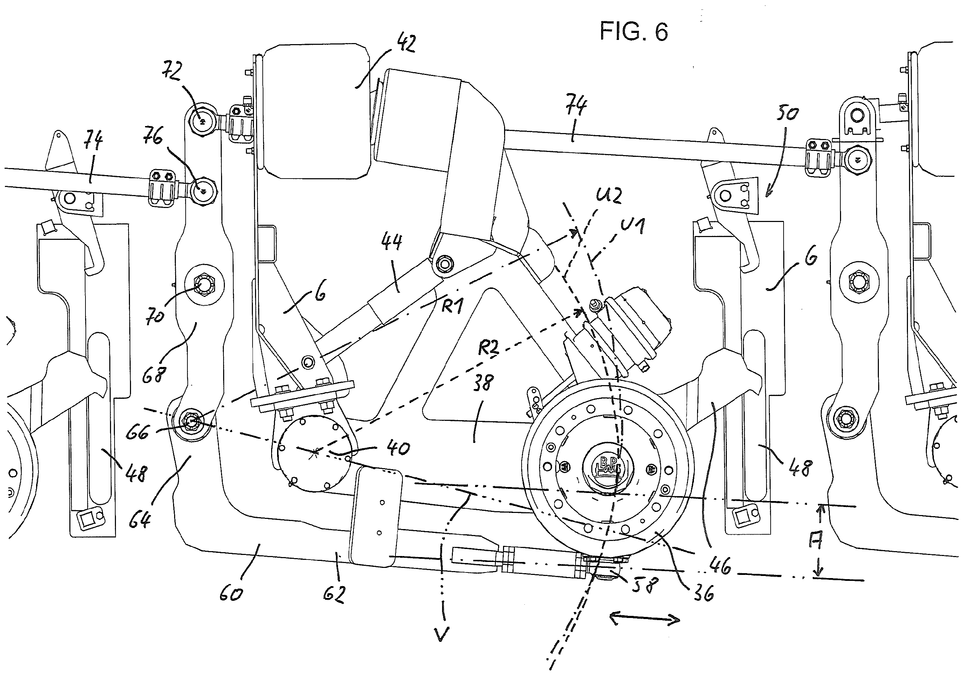

Wie am besten aus Fig. 6 hervorgeht, sind die Lagebeziehungen zwischen dem Schwenklager 66 zwischen Steuerhebel 68 und Spurstange 60 und dem Spurstangenkopf 58 einerseits und dem Schwenklager 40 zwischen dem Fahrgestell 6 und der Schwinge 38 und dem Spurstangenkopf 58 andererseits derart, dass eine Umfangslinie U1 (Strichpunktlinie in Fig. 6) entsprechend einem Kreis mit dem Radius R1 um das Lager 66 und durch dem Spurstangenkopf 58 bzw. dessen Anlenkpunkt an dem Achsschenkel 54 im Wesentlichen deckungsgleich zu einer Umfangslinie U2 (gestrichelte Linie in Fig. 6) mit dem Radius R2 um das Lager 40 und durch den Spurstangenkopf 58 bzw. dessen Anlenkpunkt an dem Achsschenkel 54 ist, wobei diese Deckungsgleichheit oder im Wesentlichen vorliegende Deckungsgleichheit innerhalb eines Auslenkungsbereichs A (Strichdoppelpunktlinien) vorliegt, welcher im normalen Fahrbetrieb des Sattelaufliegers zu erwarten ist. Gleichermaßen sind die Lagebeziehungen zwischen dem Schwenklager 66 zwischen Steuerhebel 68 und Spurstange 60 und dem Spurstangenkopf 58, dem Schwenklager 40 zwischen dem Fahrgestell 6 und der Schwinge 38 und dem Spurstangenkopf 58 und dem Spurstangenkopf 58 bzw. dessen Anlenkpunkt an dem Achsschenkel 54 so, dass eine Linie V (Strichdreifachpunktlinie) durch diese beiden Schwenklager und den Spurstangenkopf 58 bzw. dessen Anlenkpunkt an dem Achsschenkel 54 verläuft, wenn die Schwinge 38 in ihrer Neutrallage ist.

Hierdurch ist sichergestellt, dass eine Bewegung des Spurstangenkopfs 58 in Längsrichtung des Fahrgestells (Doppelpfeil in Fig. 6) einen definierten Betrag nicht überschreitet. Dies wiederum bedeutet, dass innerhalb des normalen Fahrbetriebs erfolgende Ein- und Ausfederbewegungen der Schwinge 38 keine oder eine praktisch vernachlässigbare Lenkausschlagbewegungen der Anordnung 36 und damit des entsprechenden Rads 30 bis 34 induzieren.

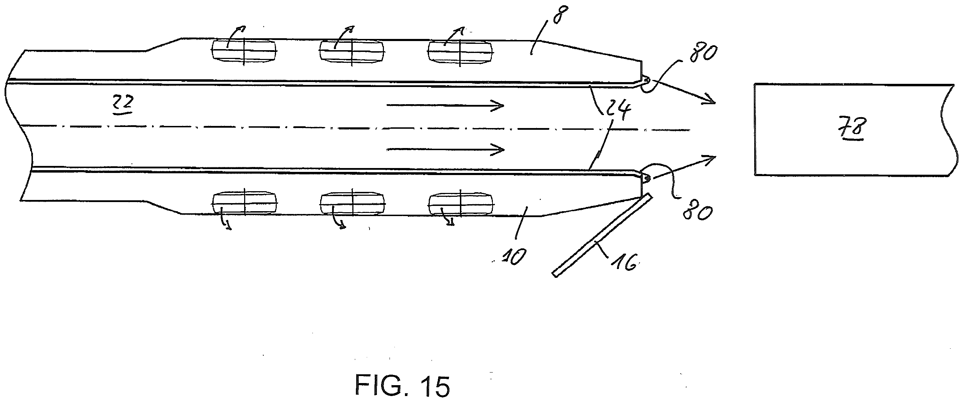

Eine über den Auslenkungsbereich A, der dem normalen Fahrbetrieb entspricht hinausgehende Auslenkung des Spurstangenkopfs 58, insbesondere eine in beispielsweise Fig. 6 nach oben gerichtete Bewegung, wenn das Fahrgestell 6 bei einem Innenlader abgesenkt wird, bewirkt aufgrund der Achsschenkellenkung mit der in Längsrichtung verlaufenden Spurstange 60 eine merkliche Lenk- oder Einschlagbewegung sämtlicher Räder 30 bis 34 dahingehend, dass diese im Sinne einer Nachspur verstellt werden. Hieraus ergibt sich gemäß Fig. 15 der Vorteil, dass beim rückwärtsgerichteten Heranfahren des Innenladers 4 an eine Transportpalette 78 die im Sinne einer Nachspur verstellten Räder 30 bis 34 dazu neigen, die beiden freien Enden der Wände 8 und 10 nach Art einer sich schließenden Schere aufeinander zuzubewegen. In Verbindung mit beiderseitigen Einlaufschrägen 80 an den Schienen 24 wird hierdurch sichergestellt, dass die Palette 78 von Beginn an und über ihre ganze Länge mit Sicherheit auf den Schienen 24 in dem Laderaum 22 zu liegen kommt.

Fig. 16A und 16B zeigt die sich im elastischen Bereich abspielende Verformung der beiden Wände 8 und 10 des Fahrgestells, die sich bei einer Rückwärtsfahrt des abgesenkten Innenladers aufgrund der oben erwähnten, durch die Absenkung erhaltenen Nachspur ergibt. Damit die Veränderungen des Fahrgestells vom Verdeck 11 aufgenommen werden können, sind die Seitenwände 11a, 11b des Verdecks 11 mit dem Dach 11c des Verdecks 11 seitlich auslenkbar verbunden, man durch einen Vergleich der Fig. 16A und 16B erkennen kann. Zu beachten gilt, dass in Fig. 16A, 16B die Räder wie auch die heckseitige Ladeluke 16 nicht gezeigt sind.

Die Verstellbewegungen der einzelnen Räder 30 bis 34 im Sinne einer Nachspur sind in Fig. 15 mit den jeweiligen Pfeilen angegeben.

Fig. 12 zeigt schematisch eine Draufsicht eine linke Lenkanordnung 82l und eine rechte Lenkanordnung 82r, sowie die wesentlichen fluidführenden Leitungen hierzu. Weiterhin ist ein Sattel 84 seitens der Zugmaschinen dargestellt. Eine Lenkbewegung in der Zugmaschine bewirkt eine entsprechende Abknickbewegung zwischen Zugmaschine und Auflieger, sodass im Bereich des Sattels 84 angeordnete Hydraulikzylinder durch entsprechende Betätigungsglieder verstellt werden und Hydraulikzylinder 86r seitens der Lenkanordnung 82r beziehungsweise 86l seitens der Lenkanordnung 82l verstellt werden. Diese Verstellbewegungen werden dann über die Verbindungsstangen 74 auf die jeweiligen Steuerhebel 68 übertragen, wie bereits weiter oben ausgeführt worden ist.

Zwei weitere Fluidzylinder 88r und 88l, welche unter einem Fluidvordruck von beispielsweise 100 bar stehen, sind über Leitungen 90 derart miteinander gekoppelt, dass beispielsweise bei Ausfall des Lenkkreises für den Zylinder 86r der Zusatzzylinder 88l über den Zylinder 88r die zugehörige Lenkanordnung 82r weiter betätigen kann und umgekehrt. Die Fluidzylinder wirken somit nach Art einer hydraulischen Spurstange.

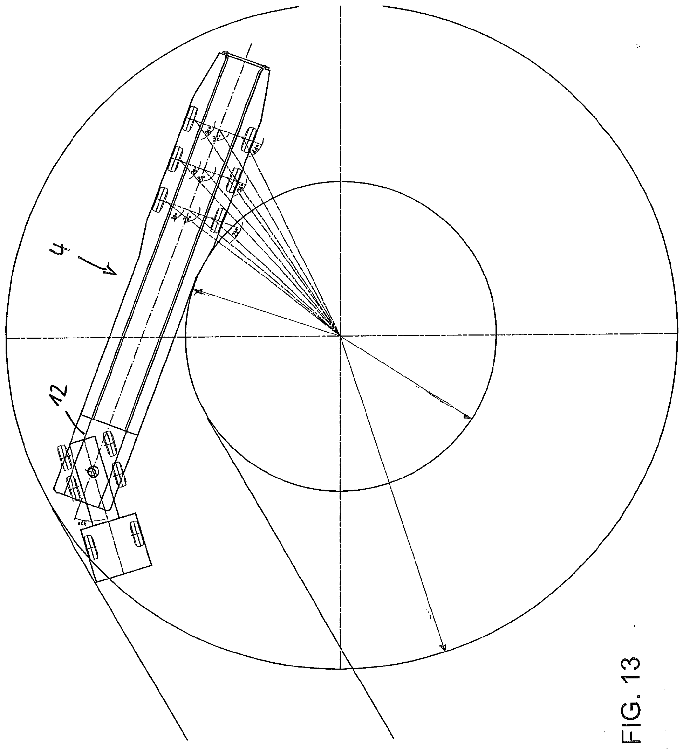

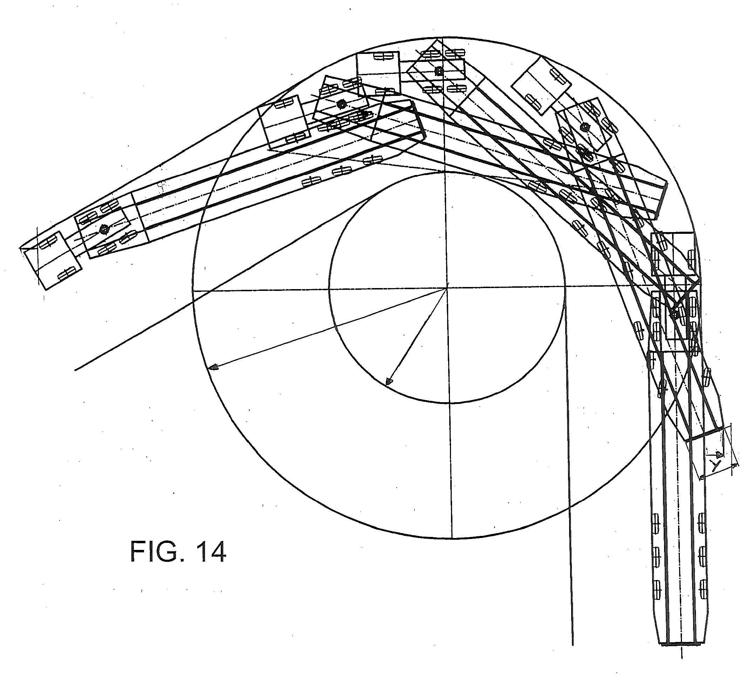

Wie aus den Figuren 1B und 13 hervorgeht, hat das Fahrgestell 6 über seine Längserstreckung hinweg gesehen keine gleichbleibende Breite, sondern ist im Bereich der Achslinien 28a bis 28c verbreitert. Diese Verbreiterung dient insbesondere dazu, den erforderlichen Lenkausschlag der einzelnen Räder 30 bis 34 gewährleisten zu können. Um trotz der Verbreiterung im Bereich der Achslinien 28 das geforderte Spurkreisverhalten zu erzielen, ist das Fahrgestell 6 im Bereich zwischen den Achslinien 28 und dem vorderen Endabschnitt 12 schmäler ausgebildet, sodass sich das Spurkreisverhalten der Figuren 13 und 14 realisieren lässt, welches konform mit den Empfehlungen zu §70 STVZO ist und ein Mitführen von Begleitpersonen oder Begleitfahrzeugen entbehrlich macht. Unterstützt wird dies weiterhin durch die aus den Figuren 1B und 13 ersichtliche, sich zum Heck hin verjüngende Formgebung des Fahrgestells 6, sodass dieser ein Ausschermaß Y hat, welches ebenfalls konform mit den Empfehlungen zu §70 STVZO ist.

## Patentansprüche

1. Sattelauflieger, insbesondere Innenlader, mit einem Fahrgestell (6), der an einem in Fahrtrichtung vorne liegenden Endabschnitt (12) eine Kupplungsvorrichtung (14), insbesondere Königszapfen, zur Verbindung mit einer Zugmaschine und an einem in Fahrtrichtung hinten liegenden Endbereich eine Mehrzahl von Achslinien (28), insbesondere drei Achslinien (28a, 28b, 28c) aufweist, wobei jede Achslinie (28) gebildet ist aus links und rechts je einem am Fahrgestell (6) in Einzelradaufhängung angeordneten Rad (30, 32, 34), wobei
jedes der Räder (30, 32, 34) durch eine Achsschenkellenkung lenkbar ausgebildet ist,
die auf jeweils derselben Seite des Fahrgestells (6) angeordneten Räder aller Achslinien (28a, 28b, 28c) im Sinne eines gleichgerichteten Lenkeinschlags gekoppelt sind,
wobei die Kopplung mechanisch erfolgt, und
wobei die Kopplung zwischen einander benachbarten Rädern auf einer Seite des Fahrzeugrahmens (6) über jeweils eine Verbindungsstange (74) erfolgt, welche sich in Fahrzeugrahmenlängsrichtung erstreckt und welche über einen Steuerhebel (68) an einer Spurstange (60) der Achsschenkellenkung angreift,
wobei die Spurstange (60) an einem ihrer Enden in einem Schwenklager (66) mit dem Steuerhebel (68) und an ihrem anderen Ende über einen Spurstangenkopf (58) mit einem Achsschenkel (54) der Achsschenkellenkung schwenkbeweglich verbunden ist, **dadurch gekennzeichnet, dass** jedes Rad an einer in Fahrt- bzw. Längsrichtung des Sattelaufliegers verlaufenden Schwinge (38) gelagert ist, welche am Fahrgestell (6) in einem zweiten Schwenklager (40) in Fahrzeughöhenrichtung schwenkbeweglich angelenkt ist, und dass
die Umfangslinie (U1) eines imaginären Kreises um die Schwenkachse des Schwenklagers (66) an der Verbindung Steuerhebel/Spurstange, der durch den Spurstangenkopf (58) bzw. dessen Angriffspunkt an dem Achsschenkel (54) verläuft, und die Umfangslinie (U2) eines imaginären Kreises um die Schwenkachse des zweiten Schwenklagers (40) an der Verbindung Schwinge/Fahrgestell, der ebenfalls durch den Spurstangenkopf (58) bzw. dessen Angriffspunkt an dem Achsschenkel (54) verläuft, sich in einem Punkt berühren, der auf einer die beiden Schwenkachsen verbindenden geraden Linie liegt.

2. Sattelauflieger nach Anspruch 1, **dadurch gekennzeichnet, dass** die Kopplung der auf jeweils derselben Seite des Fahrgestells (6) angeordneten Räder so ausgelegt ist, dass sie bei einer Lenkung unterschiedliche Lenkeinschläge der Räder erzwingt.

3. Sattelauflieger nach Anspruch 1 oder 2 **dadurch gekennzeichnet, dass** an der Schwinge (38) Federungs- und/oder Dämpfungs- und/oder Verstell- und/oder Führungselemente (42, 44, 48, 50) angreifen.

4. Sattelauflieger nach einem der vorhergehenden Ansprüche, **dadurch gekennzeichnet, dass** die Umfangslinie (U1) des imaginären Kreises um den Mittelpunkt des Schwenklagers (66) an der Verbindung Steuerhebel/Spurstange und die Umfangslinie (U2) des imaginären Kreises um den Mittelpunkt des zweiten Schwenklagers (40) an der Verbindung Schwinge/Fahrgestell in einem einem normalen Fahrbetrieb des Transportfahrzeugs entsprechenden, definierten Auslenkungsbereich (A) der Schwinge (38) gegenüber dem Fahrgestell (6) im Wesentlichen deckungsgleich sind dergestalt, dass eine Bewegung des Spurstangenkopfes (58) bzw. dessen Angriffspunkt an dem Achsschenkel (54) in Längsrichtung des Fahrgestells (6) einen definierten Betrag nicht überschreitet.

5. Sattelauflieger nach einem der vorhergehenden Ansprüche, **dadurch gekennzeichnet, dass** das Fahrgestell in der Weise absenkbar ist, dass bei einem Absenken des Fahrgestells (6) entsprechend einem Betrag, der über einen einem normalen Fahrbetrieb des Transportfahrzeugs entsprechenden, definierten Auslenkungsbereich (A) der Schwinge gegenüber dem Fahrgestell (6) hinausgeht, das jeweils an der entsprechenden Schwinge (38) gelagerte Rad eine Zwangsverstellung im Sinne einer Nachspur erfährt.

6. Sattelauflieger nach einem der vorhergehenden Ansprüche, **dadurch gekennzeichnet, dass** die Lenkung des wenigstens einen Rads auf der einen Seite des Fahrgestells (6) mit derjenigen des entsprechenden anderen Rades über eine Hydraulikverbindung (88, 90) mit dem Wirkprinzip einer quer verlaufenden Spurstange verbunden ist.

7. Sattelauflieger nach einem der vorhergehenden Ansprüche, **dadurch gekennzeichnet, dass** das Fahrgestell (6) im Bereich der wenigstens einen Achslinie (28) in Spurrichtung gesehen verbreitert ist.

8. Sattelauflieger nach einem der vorhergehenden Ansprüche, **dadurch gekennzeichnet, dass** das Fahrgestell (6) in einem in Fahrtrichtung vor und/oder hinter der wenigstens einen Achslinie (28) liegenden Bereich verjüngt ausgebildet ist.

9. Sattelauflieger nach einem der vorhergehenden Ansprüche, **gekennzeichnet durch** ein auf dem Fahrgestell ruhendes Verdeck, insbesondere Planenverdeck, mit an einem Dach seitlich schwenkbeweglich angelenkten Seitenwänden.

## Claims

1. Semi-trailer, in particular inloader, comprising a chassis (6) which has a coupling device (14), in particular kingpin, on an end section (12) located at the front in the direction of travel, for connection to a tractor unit and, on an end section located at the rear in the direction of travel, a plurality of axle lines (28), in particular three axle lines (28a, 28b, 28c), wherein each axle line (28) is formed from left and right wheels (30, 32, 34) each arranged in an independent suspension on the chassis (6), wherein
each of the wheels (30, 32, 34) is designed to be steerable through a stub axle steering,
the wheels of all the axle lines (28a, 28b, 28c) arranged on the same side of the chassis (6) are coupled in the sense of an aligned steering angle,
wherein the coupling takes place mechanically, and
wherein the coupling between adjacent wheels on a side of the vehicle frame (6) takes place via a connecting rod (74), which extends in the vehicle frame longitudinal direction and which engages on a tie rod (60) of the stub axle via a control lever (68),
wherein the tie rod (60) is pivotably connected at one of its ends in a pivot bearing (66) to the control lever (68) and at its other end via a tie rod end (58) to a stub axle (54) of the stub axle steering, **characterised in that** each wheel is mounted on a swing arm (38) extending in a travel direction or longitudinal direction of the semi-trailer, which is articulated pivotably in the vehicle-height direction on the chassis (6) in a second pivot bearing (40), and **in that** the circumference (U1) of an imaginary circle around the pivot axis of the pivot bearing (66) at the control lever/tie-rod connection, which runs through the tie rod end (58) or its point of engagement on the stub axle (54), and the circumference (U2) of an imaginary circle around the pivot axis of the second pivot bearing (40) at the swing-arm/chassis connection, which likewise extends through the tie rod end (58) or its point of engagement on the stub axle (54), touch at a point which lies on a straight line connecting the two pivot axes.

2. Semi-trailer according to claim 1, **characterised in that** the coupling of the wheels arranged on the same side of the chassis (6) is designed such that it forces different steering angles of the wheels when steering.

3. Semi-trailer according to claim 1 or 2 **characterised in that** suspension and/or damping and/or adjustment and/or guide elements (42, 44, 48, 50) engage on the swing arm (38).

4. Semi-trailer according to any one of the preceding claims, **characterised in that** the circumference (U1) of the imaginary circle around the centre point of the pivot bearing (66) at the control lever/tie-rod connection and the circumference (U2) of the imaginary circle around the centre point of the second pivot bearing (40) at the swing-arm/chassis connection in a defined deflection range (A) of the swing arm (38) relative to the chassis (6), corresponding to the normal travel operation of the transport vehicle, are substantially congruent such that a movement of the tie rod end (58) or the engagement point thereof on the stub axle (54) in the longitudinal direction of the chassis (6) cannot exceed a defined value.

5. Semi-trailer according to any one of the preceding claims, **characterised in that** the chassis may be lowered in such a way that when the chassis (6) is lowered, corresponding to an amount which exceeds a corresponding defined deflection range (A) of the swing arm with respect to the chassis (6) in normal driving operation of the transport vehicle, the wheel mounted on the corresponding swing arm (38) experiences a forced adjustment in the sense of a toe out.

6. Semi-trailer according to any one of the preceding claims, **characterised in that** the steering of the at least one wheel on the one side of the chassis (6) is connected to that of the corresponding other wheel via a hydraulic connection (88, 90) with the operating principle of a transversely-extending tie rod.

7. Semi-trailer according to any one of the preceding claims, **characterised in that** the chassis (6) widens in the region of the at least one axle line (28) viewed in the toe direction.

8. Semi-trailer according to any one of the preceding claims, **characterised in that** the chassis (6) is designed to be tapered in a region in front of and/or behind the at least one axle line (28) in the direction of travel.

9. Semi-trailer according to any one of the preceding claims, **characterised by** a canopy, in particular a tarpaulin, resting on the chassis, with side walls hinged on a roof in a laterally pivotable manner.

## Revendications

1. Semi-remorque, en particulier tiroir, avec un châssis (6), qui présente un dispositif d'accouplement (14), en particulier un pivot, sur une partie d'extrémité (12) située à l'avant dans le sens de déplacement pour la liaison avec un tracteur et une pluralité de lignes d'axe (28), en particulier trois lignes d'axe (28a, 28b, 28c), sur une partie d'extrémité située à l'arrière dans le sens de déplacement, dans laquelle chaque ligne d'axe (28) est formée par une roue (30, 32, 34) agencée respectivement à gauche et à droite sur le châssis (6) dans une suspension indépendante de roues, dans laquelle
chacune des roues (30, 32, 34) est réalisée pour pouvoir être dirigée par une direction à fusée,
les roues de toutes les lignes d'axe (28a, 28b, 28c) agencées sur respectivement le même côté du châssis (6) sont couplées dans le sens d'un braquage unidirectionnel,
dans laquelle le couplage se déroule de manière mécanique, et
dans laquelle le couplage entre des roues adjacentes l'une par rapport à l'autre sur un côté du cadre de véhicule (6) s'effectue via respectivement une barre de liaison (74), laquelle s'étend dans le sens longitudinal du cadre de véhicule et laquelle s'engage sur une barre de connexion (60) de la direction à fusée via un levier de commande (68),
dans laquelle la barre de connexion (60) est reliée à l'une de ses extrémités au levier de commande (68) dans un palier de pivotement (66) et à son autre extrémité via une tête de barre de connexion (58) à une fusée de roues (54) de la direction à fusée, **caractérisée en ce que** chaque roue est stockée sur un bras oscillant (38) s'étalant dans le sens de déplacement ou dans le sens longitudinal de la semi-remorque, lequel est articulé sur le châssis (6) dans un second palier de pivotement (40) de manière à pouvoir pivoter dans le sens de la hauteur du véhicule, et **en ce que**
la ligne circonférentielle (U1) d'un cercle imaginaire autour de l'axe de pivotement du palier de pivotement (66) au niveau de la liaison levier de commande/barre de connexion, qui traverse la tête de barre de connexion (58) ou son point d'engagement sur la fusée de roues (54), et la ligne circonférentielle (U2) d'un cercle imaginaire autour de l'axe de pivotement du second palier de pivotement (40) au niveau de la liaison bras oscillant/châssis, qui traverse également la tête de barre de connexion (58) ou son point d'engagement sur la fusée de roue (54), se touchent en un point qui se situe sur une ligne droite reliant les deux axes de pivotement.

2. Semi-remorque selon la revendication 1, **caractérisée en ce que** le couplage des roues agencées sur respectivement le même côté du châssis (6) est conçu de sorte qu'il contraint différents braquages des roues lors d'une direction.

3. Semi-remorque selon la revendication 1 ou 2, **caractérisée en ce que** des éléments de suspension et/ou d'amortissement et/ou de réglage et/ou de guidage (42, 44, 48, 50) entrent en contact au niveau du bras oscillant (38).

4. Semi-remorque selon l'une quelconque des revendications précédentes, **caractérisée en ce que** la ligne circonférentielle (U1) du cercle imaginaire autour du point central du palier de pivotement (66) au niveau de la liaison levier de commande/barre de connexion et la ligne circonférentielle (U2) du cercle imaginaire autour du point central du second palier de pivotement (40) au niveau de la liaison bras oscillant/châssis dans une plage de déformation (A) définie du bras oscillant (38) par rapport au châssis (6) correspondant à une conduite normale du véhicule de transport sont sensiblement coïncidentes de sorte qu'un mouvement de la tête de barre de connexion (58) ou son point d'application sur la fusée de roues (54) dans le sens longitudinal du châssis (6) ne dépasse pas une quantité définie.

5. Semi-remorque selon l'une quelconque des revendications précédentes, **caractérisée en ce que** le châssis peut être abaissé de telle manière que, lorsque le châssis (6) est abaissé de manière correspondante à une quantité qui dépasse une plage de déformation (A) définie du bras oscillant par rapport au châssis (6) correspondant à une conduite normale du véhicule de transport, la roue montée respectivement sur le bras oscillant (38) correspondant subit un réglage forcé dans le sens d'un pincement.

6. Semi-remorque selon l'une quelconque des revendications précédentes, **caractérisée en ce que** la direction de l'au moins une roue sur l'un côté du châssis (6) est reliée à celle de l'autre roue correspondante via une liaison hydraulique (88, 90) avec le principe de fonctionnement d'une barre de connexion s'étalant de manière transversale.

7. Semi-remorque selon l'une quelconque des revendications précédentes, **caractérisée en ce que** le châssis (6) est élargi dans la plage de l'au moins une ligne d'axe (28), vue dans le sens de la voie.

8. Semi-remorque selon l'une quelconque des revendications précédentes, **caractérisée en ce que** le châssis (6) est réalisé effilé dans une plage située devant et/ou derrière l'au moins une ligne d'axe (28) dans le sens de déplacement.

9. Semi-remorque selon l'une quelconque des revendications précédentes, **caractérisée par** une capote reposant sur le châssis, en particulier une capote bâchée, avec des parois latérales articulées à un toit pour un mouvement de pivotement latéral.
